# EUROPEAN PATENT APPLICATION

(11) **EP 3 603 830 A1**
(43) Date of publication of application: **05.02.2020**
(21) Application number: 19188586.2
(22) Date of filing: 26.07.2019
(51) Int. Cl.: B09B 3/00, B09B 5/00, B29D 7/00, B32B 3/14, B32B 3/18, E04F 15/02, E04F 15/024

(54) **A METHOD FOR PRODUCING RUBBER FLOORING PANELS STARTING FROM OUT-OF-USE TIRES AND CORRESPONDING FLOORING PANEL**

(30) Priority: 01.08.2018 IT 201800007739
(71) Applicant: Bonanno, Alessandra, 10024 Moncalieri (TO) (IT); Catania, Sasha, 10024 Moncalieri (TO) (IT)
(72) Inventor: Bonanno, Alessandra, 10024 Moncalieri (TO) (IT); Catania, Sasha, 10024 Moncalieri (TO) (IT)
(74) Representative: Marchitelli, Mauro

(57) **Abstract**

A method for producing rubber flooring panels starting from out-of-use tires (10) comprising two side flanks (14) and a circumferential band (12) including a tread band (16) and a reinforcing belt (18), wherein the method comprises:
- removing the flanks (14) from the circumferential band (12) and transversely cutting the circumferential band (12),
- cutting the circumferential band (12) along a surface parallel to the outer surface of the circumferential band (12) and separating the tread band (16) from the reinforcing belt (18),
- arranging a plurality of parallel tread bands (16), and
- arranging a plurality of reinforcing belts oriented orthogonally to said tread bands (16) and fastening the reinforcing belts (18) to said tread bands, so as to form a flooring panel (44) having a first surface formed by said tread bands (16) and a second surface formed by said reinforcing belts (18).

## Description

### Field of the invention

The present invention relates to a method for producing rubber flooring panels starting from out-of-use tires, and corresponding flooring panel.

The invention was developed in particular for producing flooring panels for covering cycle paths. However, the invention is not limited to this specific field of use and can be applied to the production of rubber flooring panels for any use, such as, for example, civil or industrial flooring, coverings for sports fields, playgrounds, etc.

According to another aspect, the invention also relates to a flooring panel obtained from out-of-use tires.

### Description of the state-of-the-art

When a tire no longer has the characteristics necessary for safe and efficient performance on the vehicle, even by means of its reconstruction, it becomes a waste that must be collected for recovery and recycling in special facilities.

The rubber constituting the tire is a mixture of high quality polymers, with chemical-physical characteristics that remain unchanged in the recycled rubber.

With recycled rubber from out-of-use tires, many products are produced that can be applied to very different sectors. For example, the use of recycled rubber coming from out-of-use tires is widely used in the construction sector to produce acoustic and antivibration insulating materials, as well as in the field of sports equipment for producing panels or tiles for playgrounds, soccer fields, sports flooring, etc. The recycled rubber obtained from recycling of out-of-use tires is also used for producing asphalt for road paving, for bicycle paths, urban furnishings and elements for road safety.

The process of treating out-of-use tires according to the prior art envisages an initial grinding in which the out-of-use tires are reduced to fragments with dimensions of 5 to 40 cm. The pieces coming from the first grinding are then subjected to a second grinding, in which the pieces are reduced into smaller parts to separate rubber, steel and textile fibers. At the end of the treatment process, steel, recycled rubber and textile fibers are obtained. The rubber thus obtained is subdivided, depending on the dimensions, into: rubber chips with dimensions of 20-50 mm, rubber granules with dimensions of 0.8-20 mm, and rubber powder with dimensions smaller than 0.8 mm.

The rubber thus obtained can be mixed with various binding compounds for producing articles of various types, such as, for example, panels or tiles for rubber flooring.

The process of recycling out-of-use tires according to the prior art involves the need for complex equipment to obtain separation of the rubber from the other components of the tires (steel and textile fibers), and a high energy expenditure. This is reflected in the high cost of recycled rubber products obtained from out-of-use tires.

Another problem of tire recycling processes according to the prior art is that, after shredding, the rubber of the tires loses all the characteristics of mechanical strength, such as, for example, the tensile strength characteristics. The rubber obtained by shredding the out-of-use tires is basically used as an inert material and large quantities of binding agents are needed to form panels. However, despite the use of large amounts of binding agents, the panels obtained from shredded rubber have poor characteristics of mechanical strength.

### Object and summary of the invention

The present invention aims to provide a method for producing rubber flooring panels starting from out-of-use-tires that overcomes the problems of the prior art.

According to the present invention, this object is achieved by a method having the characteristics forming the subject of claim 1.

According to another aspect, the invention also relates to a flooring panel obtained from out-of-use tires having the characteristics of claim 5.

The claims form an integral part of the disclosure provided here in relation to the invention.

As will become clear in the following description, the method according to the present invention makes it possible to produce rubber flooring panels without the need to grind and shred used tires to separate the rubber from the other components of the tire (steel and textile materials).

The method according to the present invention envisages separating the circumferential band of the tires into two strips: one band of rubber tread and a reinforcing belt containing steel wires and textile fibers, maintaining the structure of these two components intact.

After separation, the tread bands are arranged parallel to each other, and the reinforcing belts are arranged transversely to the tread bands and are fixed to the tread bands by means of adhesives for vulcanized rubber.

The transverse arrangement of the reinforcing belts with respect to the tread bands allows the tread bands to be kept in a flat condition.

The panels thus obtained can be used, for example, for paving cycle paths, sports areas, playgrounds, etc., as well as for paving urban or industrial areas of various types.

The processes for separating the tread bands from the belts can be carried out with a considerably simpler apparatus and with a lower energy expenditure compared to the equipment traditionally used for separating rubber from other tire components.

The process according to the present invention therefore makes it possible to produce panels for rubber flooring that are considerably cheaper than those produced from recycled granular rubber.

Moreover, the panels obtained with the method according to the invention have mechanical characteristics (for example, tensile strength) which are considerably higher than those of panels obtained from shredded rubber.

Another advantage of the solution according to the invention is that it involves a much lower consumption of chemical compounds, such as adhesives and binding agents with respect to the solutions according to the prior art.

### Brief description of the drawings

Further characteristics and advantages of the present invention will become apparent from the detailed description that follows, given purely by way of non-limiting example, wherein:
- Figure 1 is a schematic perspective view of an out-of-use tire usable in a method according to the present invention,
- Figure 2 schematically illustrates a separation step of the flanks from the circumferential band of the tire,

- Figure 3 is a schematic cross-section along the line III-III of Figure 2,
- Figure 4 is a schematic perspective view of a cutting apparatus for separating the tread band from the belt of each tire,
- Figure 5 is a perspective view from a different angulation of the apparatus of Figure 4,
- Figure 6 is a schematic cross-section illustrating the cutting step,
- Figure 7 is a schematic view illustrating the step of assembling the tread bands and the belts for producing flooring panels,
- Figure 8 is a perspective view of a finished flooring panel, and
- Figure 9 is a perspective view illustrating a portion of a cycle path formed with rubber flooring panels obtained with the method according to the present invention.

### Detailed description

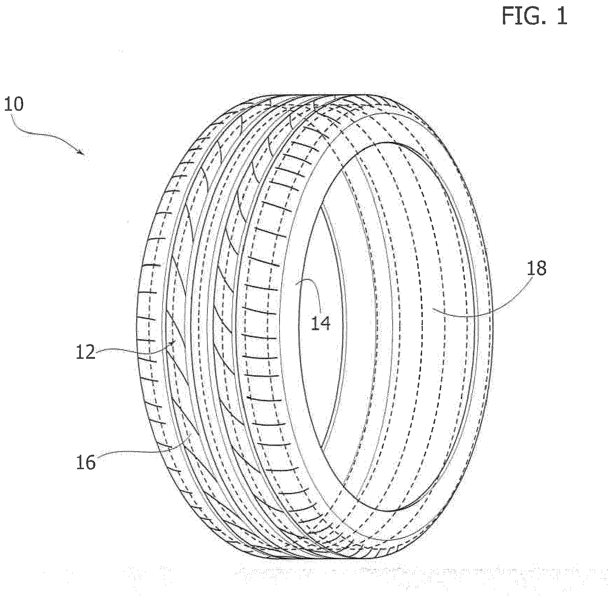

Numeral 10 in Figure 1 indicates an out-of-use tire that can be used in a method according to the present invention. The tire 10 comprises a circumferential band 12 and two lateral sides 14. The circumferential band 12 comprises a tread band 16 provided with grooves and a reinforcing belt 18 fixed to the inner part of the tread band 16. The reinforcing belt 18 comprises a reinforcing structure formed of steel wires and/or textile fibers, incorporated in a vulcanized rubber matrix.

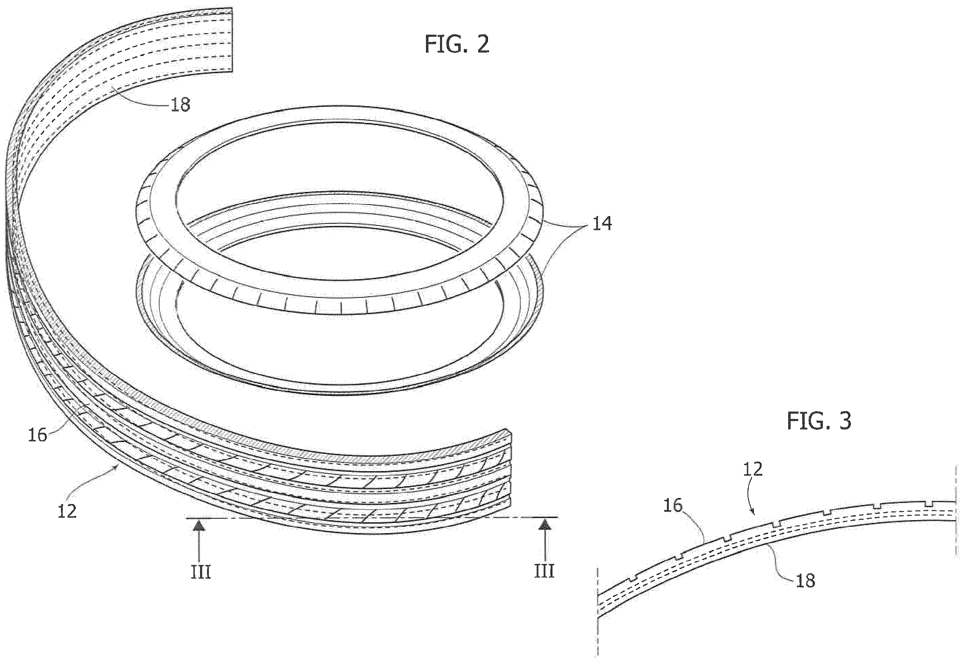

With reference to Figure 2, in a first step, the flanks 14 are removed from the circumferential band 12. Removal of the flanks 14 can be performed by cutting along the side edges of the circumferential band 12. The circumferential band 12 is then cut in a transverse direction so as to form an elongated strip.

After removal of the flanks 14 and the transverse cut, the circumferential band 12 maintains a curved shape as illustrated in Figures 2 and 3. This is due to the fact that the reinforcing belt 18 imparts the characteristic curvature of the tire to the tread band 16.

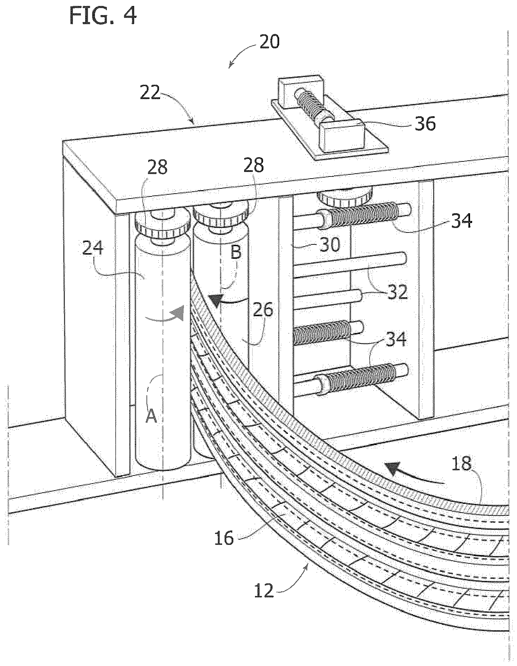

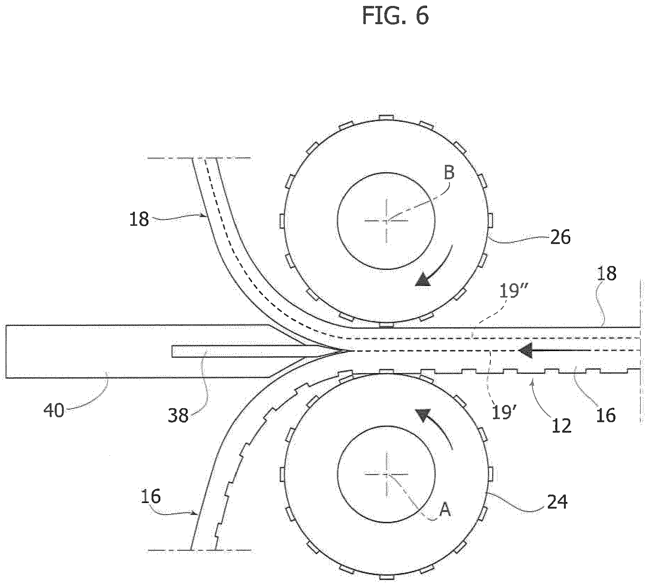

In a subsequent step, illustrated in Figures 4 and 6, the circumferential band 12 is passed through a cutting apparatus 20 that creates a cut in the thickness of the circumferential band 12 along a cutting surface parallel to the outer surface of the circumferential band 12, so as to separate the tread band 16 from the reinforcing belt 18.

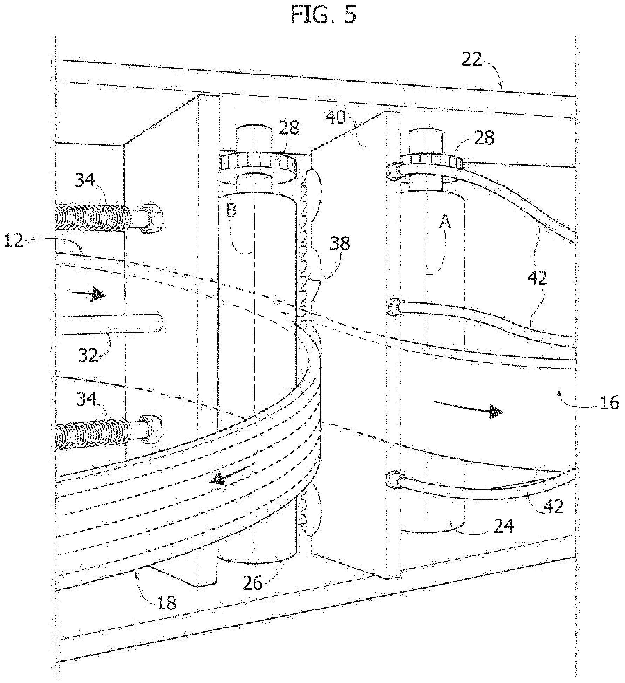

With reference to Figures 4, 5 and 6, the cutting apparatus 20 can comprise a stationary support structure 22 that carries two rollers 24, 26 rotatable about respective axes A, B parallel to each other. The two rollers 24, 26 are rotated about the respective axes A, B in opposite directions to each other. The rollers 24, 26 can be controlled by an electric motor, for example, via chain transmissions. The rollers 24, 26 can be provided with respective crown gears 28 to cooperate with drive chains.

The first roller 24 can be rotatable about a fixed first axis A, and the second roller 26 can be rotatable about a transversely moving second axis B. The second roller 26 can be elastically pressed against the first roller 24. For example, the second roller 26 can be carried by a movable support 30 guided in a transverse direction by guide bars 32. Helical springs in compression 34 may generate the elastic force that presses the second roller 26 against the first roller 24. To compensate for the transverse movement of the second roller 26, the chain transmission, which drives the second roller 26 into rotation, may comprise a chain-tightening device 36.

The cutting apparatus 20 comprises a blade 38 contained in a plane orthogonal with respect to a plane passing through the axes A and B. The blade 38 can be a linear blade or a disc blade. The blade 38 can be located substantially at the center of the gap formed between the rollers 24, 26, and can be adjustable in the transverse direction. The blade 38 can be carried by a blade-guide structure 40, which can be provided with tubes 42 for supplying a lubricating and cooling liquid. The blade 38 can be constantly lubricated during operation to reduce the abrasion exerted by the vulcanized rubber and the metal. The blade 38 can be locked in the transverse direction to ensure the necessary cutting precision.

The blade 38 separates the reinforcing belt 18 from the tread band 16. Usually, as illustrated in Figure 6, the reinforcing belt 18 has two layers of metal wires 19', 19". According to one embodiment, the cut can be made at the inner layer of metal wires 19'. The cut eliminates the layer of metal wires 19' and, after cutting, the reinforcing belt 18 only has the layer of metal wires 19".

As illustrated in Figure 6, to obtain a precise cut, the circumferential strips 12 are compressed between the rollers 24, 26 to eliminate, during the cutting operation, the natural curvature of the circumferential band 12. The blade 38 cuts each circumferential band 12 in a plane parallel to the outer surface of the circumferential band 12. Following cutting, the tread band 16 consisting solely of rubber and the reinforcing belt 18 consisting of a structure of metal wires and/or textile fibers incorporated in a vulcanized rubber matrix, are separated from each other.

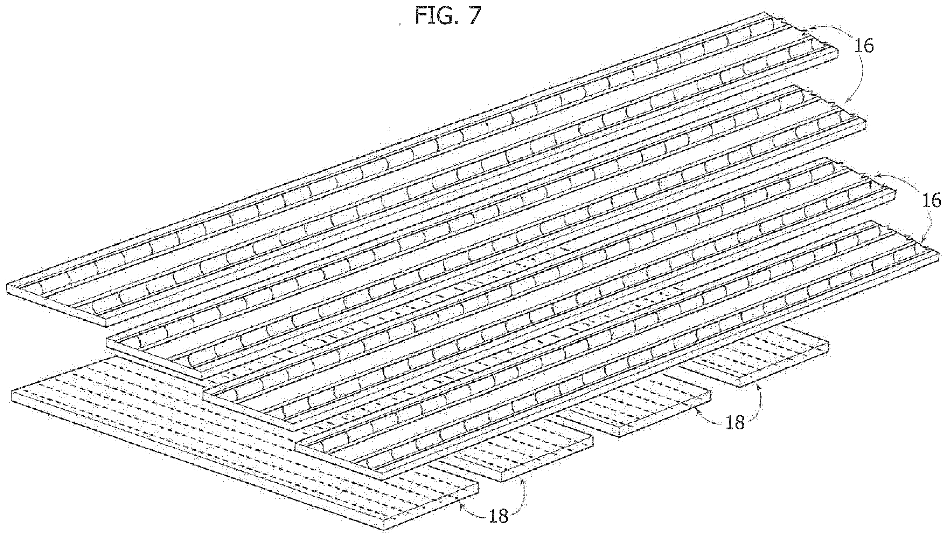

With reference to Figure 7, after the cutting step, a plurality of tread bands 16 and a plurality of reinforcing belts 18 are separated from each other. The tread bands 16 and the reinforcing belts 18 have the shape of elongated rectangular strips which can have, depending on the dimensions of the tires of origin, a variable width from 16 to 24 cm and a variable length from 180 to 220 cm.

With reference to Figure 7, for producing flooring panels, a plurality of tread bands are placed side-by-side with their respective longitudinal edges in contact with each other. The tread bands 16 are arranged with the respective surfaces provided with grooves facing in the same direction. Possibly, the tread bands can be cut so that they all have the same length.

The reinforcing belts 18 are oriented transversely with respect to the tread bands 16, and can be applied to the surfaces of the tread bands 16 opposite to those bearing the incisions. Alternatively, if panels are required with a smooth external surface, such as, for example, for skating rinks, the reinforcing belts can be applied on the surfaces of the tread bands bearing the incisions.

The reinforcing belts 18 can be cut so as to have the same length, for example, equal to the width of the mat formed by the tread bands 16 side-by-side to each other. The reinforcing belts 18 are arranged with the respective longitudinal edges in contact with each other, so as to cover the entire lower surface of the mat formed by the tread bands 16. The reinforcing belts 18 are fixed to the tread bands 16, for example, by an adhesive for vulcanized rubber.

To increase the mechanical characteristics of the panels, according to a possible embodiment, a metal mesh can be arranged between the tread bands 18 and the reinforcing belts 18.

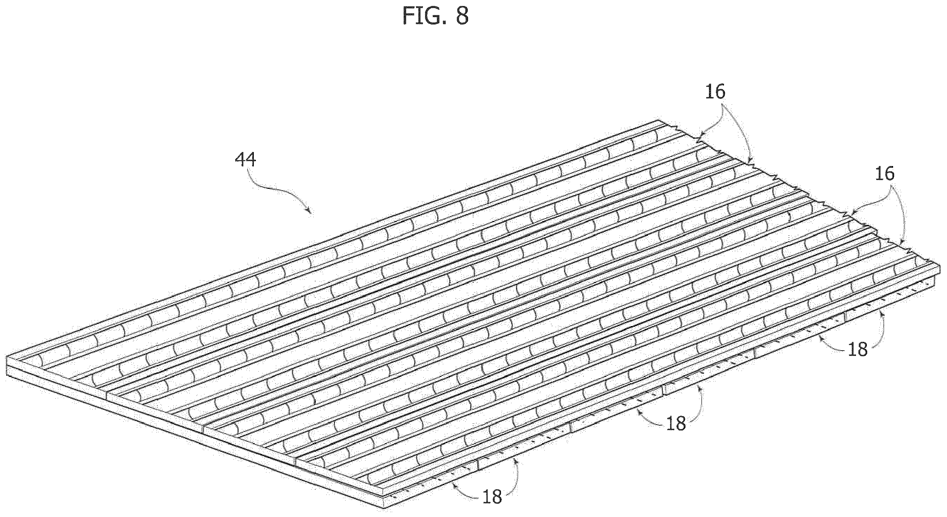

With reference to Figure 8, at the end of this operation, a rubber flooring panel 44 is obtained, having an upper surface formed by the surfaces of the smooth or incised tread bands 16, and a lower surface formed by the reinforcing belts 18 applied transversely to the tread bands 16.

The arrangement of the tread bands 16 and of the reinforcing belts 18 with transverse orientation allows to panels 44 with a flat shape to be obtained. An important characteristic to obtain flat panels is that the cutting of the reinforcing belts 18 eliminates one of the layers of metal wires, so that the reinforcing belts remain flat after cutting.

The panels also have excellent mechanical strength thanks to the presence of a structure made of harmonic steel wires inside the reinforcing belts 18.

The upper surface of the flooring panel 44 provides excellent characteristics of adherence and smoothness.

The upper surface of the flooring panels 44 can be painted. For painting, epoxy resins can be used which can fill the grooves of the tread bands. The panels for cycle paths can be painted with photoluminescent resins that can emit light radiation up to 3-4 hours after sunset, in order to make the cycle path visible even after sunset.

The flooring panels 44 thus obtained can be used for paving sports cycling tracks, urban cycle paths, sports fields, playgrounds, industrial and civil paving, dirt roads, garage ramps, parking lots, etc.

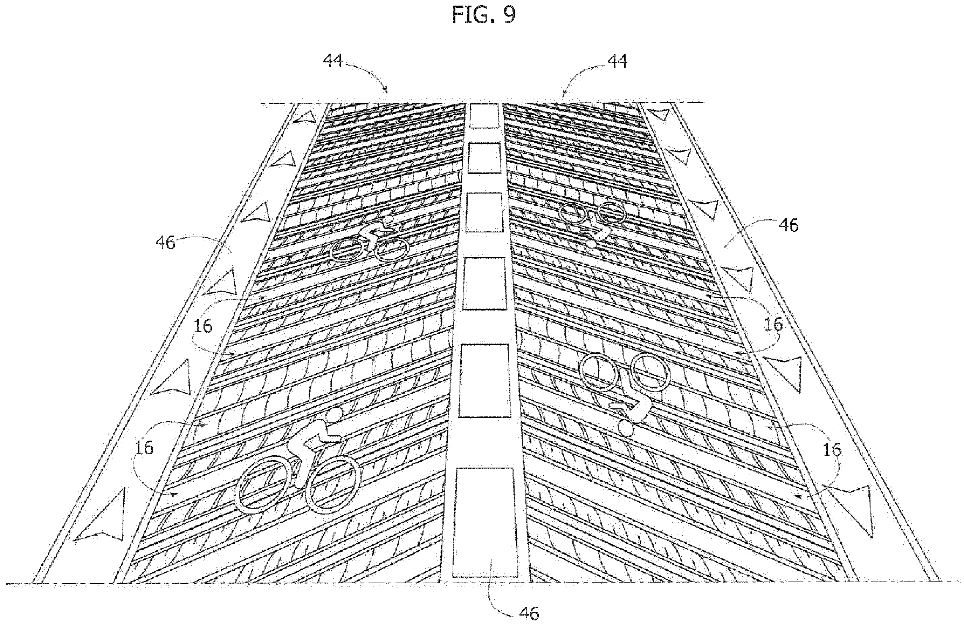

Figure 9 shows, purely by way of example, the use of paving panels 44 for producing a cycle path with two directions, with two lanes formed by a series of panels 44 joined together in a longitudinal direction and delimited longitudinally by bands 46 that can be formed by portions of the reinforcing belts 18 projecting beyond the side edges of the flooring panels 44.

The panels according to the invention avoid cementing of green areas, and can also be applied on asphalt roads damaged by holes and other irregularities, to make the sliding surface smoother and more uniform.

The panels according to the present invention are particularly advantageous for producing sports cycle tracks (for example, "pump tracks") traditionally formed by bumps made of earth or wood. The panels according to the invention are particularly advantageous for coating modular wooden structures for pump tracks.

During the cutting process, a rubber powder is formed which can be mixed with binding agents and used for producing accessory elements such as traffic-dividing elements between two lanes of a cycle path.

The method for producing flooring panels according to the present invention maintains the structure of the tread band 16 and of the reinforcing belt 18 of the out-of-use tires and maintains the mechanical characteristics of the tires unaltered.

The equipment necessary for implementing the method according to the present invention is simpler and cheaper than the grinding and separating apparatuses necessary for the methods according to the prior art. The energy expenditure for producing the panels according to the present invention is much lower than that required for producing recycled rubber panels that involve the grinding of out-of-use tires and the separation of rubber-metal-textile fibers.

The flooring panels according to the invention employ minimal amounts of glues and other chemical substances with respect to the previously known solutions.

The flooring panels obtained with the method according to the present invention are therefore cheaper than the flooring panels made of recycled rubber according to the prior art.

Of course, without prejudice to the principle of the invention, the details of construction and the embodiments can be widely varied with respect to those described and illustrated, without thereby departing from the scope of the invention as defined by the claims that follow.

## Claims

1. A method for producing rubber flooring panels starting from out-of-use tires (10) comprising two side flanks (14) and a circumferential band (12) including a tread band (16) and a reinforcing belt (18), wherein the method includes:
- removing the flanks (14) from the circumferential band (12) and transversely cutting the circumferential band (12),
- cutting the circumferential band (12) along a surface parallel to the outer surface of the circumferential band (12) and separating the tread band (16) from the reinforcing belt (18),
- arranging a plurality of parallel tread bands (16), and
- arranging a plurality of reinforcing belts oriented orthogonally to said tread bands (16) and fastening the reinforcing belts (18) to said tread bands, so as to form a flooring panel (44) having a first surface formed by said tread bands (16) and a second surface formed by said reinforcing belts (18).

2. A method according to claim 1, wherein the cut of said circumferential band (12) is carried out by passing said circumferential band (12) between two rotating rollers (24, 26) elastically pressed against each other and providing a cutting blade (38) oriented orthogonally with respect to a plane passing through the rotation axes (A, B) of said rollers (24, 26).

3. A method according to claim 1, wherein said tread bands (16) are arranged with respective longitudinal edges in contact with each other and with respective surfaces provided with grooves facing the same direction, and wherein said reinforcing belts are applied on surfaces of said tread bands (16) opposite the surfaces bearing said grooves or on the surfaces of said tread bands (16) bearing said grooves.

4. A method according to claim 3, wherein said reinforcing belts (18) are arranged with respective longitudinal edges in contact with each other.

5. A flooring panel obtained from out-of-use tires, comprising a plurality of tread bands (16) arranged parallel to each other and a plurality of reinforcing belts (18) separated by said tread bands (16) by cutting along a surface parallel to the outer surface of said tread bands (16), wherein said reinforcing belts (18) are oriented orthogonally to said tread bands (16).

6. A flooring panel according to claim 5, wherein said tread bands are arranged with respective longitudinal edges in contact with each other.

7. A flooring panel according to claim 5 or claim 6, wherein said reinforcing belts (18) are applied to surfaces of said tread bands (16) opposite the surfaces of said tread bands (16) having grooves, or on surfaces of said tread bands (16) provided with grooves.

8. A flooring panel according to any one of Claims 5 to 7, wherein the reinforcing belts (18) are applied to the said tread bands (16) with respective longitudinal edges in contact with each other.

9. A flooring panel according to any one of claims 5 to 8, wherein said tread bands (16) and said reinforcing belts (18) are fixed to each other by means of an adhesive for vulcanized rubber.

10. A flooring panel according to any one of claims 5 to 9, comprising a metal mesh between said tread bands (16) and said reinforcing belts (18).
